# EUROPEAN PATENT SPECIFICATION

(11) **EP 1 054 600 B1**
(45) Date of publication and mention of the grant of the patent: **19.07.2006**
(21) Application number: 99904863.0
(22) Date of filing: 04.02.1999
(51) Int. Cl.: A23F 3/08

(54) **TEA MANUFACTURE**
TEEHERSTELLUNG
TRAITEMENT DU THE

(30) Priority: 13.02.1998 EP 98301064
(43) Date of publication of application: 29.11.2000
(73) Proprietor: UNILEVER PLC, London EC4P 4BQ (GB); UNILEVER N.V., 3013 AL Rotterdam (NL)
(72) Inventor: GOODSALL, Christopher William, Bedford MK44 1LQ (GB); HODGES, Rosalind C., Unilever Research Colworth, Bedford MK44 1LQ (GB); JONES, Timothy G., Unilever Research Colworth, Bedford MK44 1LQ (GB); MAWSON, Jonathan D., Unilever Research Colworth, Bedford MK44 1LQ (GB); STABLER, Peter J., Unilever Research Colworth, Bedford MK44 1LQ (GB)
(74) Representative: Hugot, Alain
(86) International application number: PCT/EP1999/000775
(87) International publication number: WO 1999/040799

(56) References cited:
- DE-C- 885 812
- GB-A- 661 699
- US-A- 3 438 785
- DATABASE WPI Section Ch, Week 8726 Derwent Publications Ltd., London, GB; Class D13, AN 87-183340 XP002072183 & JP 62 115236 A (TERADA MFG)
- DATABASE WPI Section Ch, Week 8420 Derwent Publications Ltd., London, GB; Class D13, AN 84-125271 XP002072184 & SU 1 034 685 A (ROINISHVILI G D)
- CHEMICAL ABSTRACTS, vol. 81, no. 9, 1974 Columbus, Ohio, US; abstract no. 103275v, XP002104087 & JP 74 004394 A (INSTITUTE OF PHYSICAL AND CHEMICAL RESEARCH)
- DATABASE WPI Section Ch, Week 8827 Derwent Publications Ltd., London, GB; Class D13, AN 88-189125 XP002104088 & SU 1 358 894 A (DZNELADZE Z YU) , 15 December 1987
- PATENT ABSTRACTS OF JAPAN vol. 098, no. 001, 30 January 1998 & JP 09 234013 A (AKITA PREF GOV;BUSSAN NAKASEN KK), 9 September 1997

## Description

The present invention relates to tea processing, or more particularly a method and apparatus for processing whole leaf tea.

### Background and prior art

With the exception of water, tea is the most widely consumed of all beverages. Its world-wide per capita consumption has been estimated at 0.1 litre per day.

Leaf tea may be prepared as green leaf tea or black leaf tea. The method of preparing such teas is well-known to those skilled in the art. Generally, to prepare black leaf tea, fresh green leaves of the plant *Camellia sinensis* are withered (subjected to mild drying), comminuted, fermented (in which process enzymes in the tea leaf use atmospheric oxygen to oxidise various substrates to produce brown-coloured products) and then fired (to dry the tea leaves). Green leaf tea is not exposed to the fermentation process. Partial fermentation may be used to produce intermediate-type teas known as "oolong" tea.

Conventional wisdom dictates that tea must be macerated in some way to liberate the fermentative enzymes and their substrates within the leaves. One can macerate tea in many ways but broadly speaking there are two main mechanised methods for doing this.

The first, called "orthodox manufacture", involves rolling withered tea leaves as part of a standardised procedure including fermenting and drying steps. So called "orthodox tea" is typically characterised by large leaf portions that are aesthetically pleasing to many but produce lighter liquors due to less extensive fermentation.

The second method is the most popular of a number of non-orthodox methods that involves using a machine resembling a mangle that cuts, tears and curls tea leaves. The original machine was invented by W. McKercher in 1930 and is commonly referred to a CTC (cut-tear-curl) machine. The finely cut product is known generically as "CTC tea" and is characterised by a fast infusion rate and strong colour.

Both orthodox and CTC machines are often used in conjunction with a Rotorvane machine that minces withered tea leaves. These methods and their history and role in tea manufacture are described in "Tea: cultivation to consumption" edited by K. C. Willson and M. N. Clifford, Chapman & Hall, 1992.

Generally speaking consumer preference for either orthodox or CTC tea is a matter of national or regional culture. In some countries the visual appearance and texture of leaf tea are both important indicators of quality, larger leaf particles being associated with higher quality. In Western markets tea is increasingly purchased in filter paper bags and the colour of the infused product is more important.

It is believed that some consumers want the best of both worlds. For example a leaf tea that has the aesthetic appearance and texture of orthodox processed tea but has the liquor characteristics of a fuller fermented CTC processed tea. However the applicants are not aware of any commercially available tea manufacturing equipment that can deliver a leaf tea that resembles orthodox tea but infuses like a CTC processed tea.

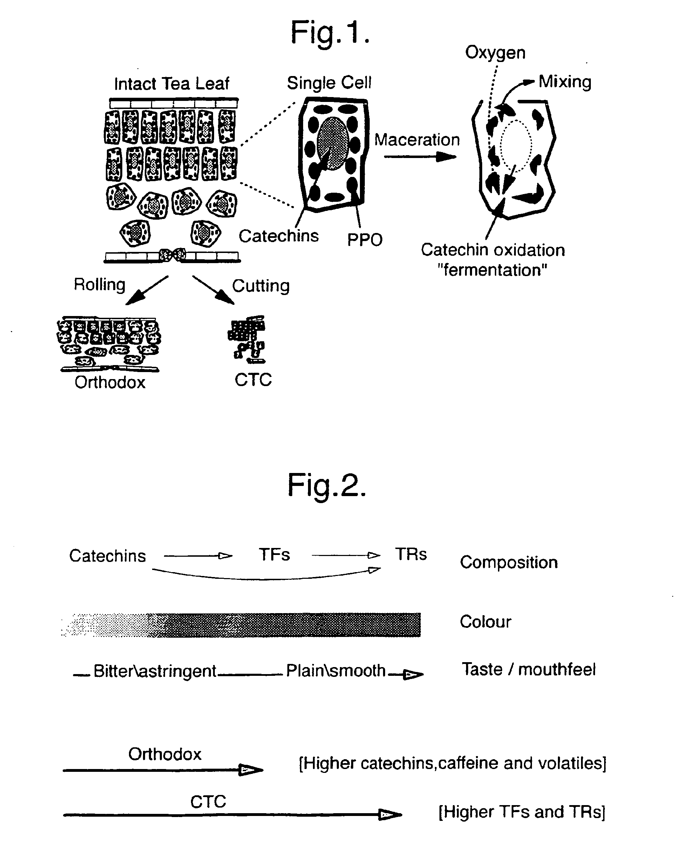

Current tea manufacture processes (including both orthodox and CTC) combine leaf disruption with particle size reduction. In intact leaf the catechins and oxidative enzymes (polyphenol oxidase and peroxidase) are kept in separate, membrane bound, compartments. The maceration process breaks down this internal compartmentalisation and allows the enzymes and substrates to mix and, in the presence of oxygen, the fermentation process is initiated. This is illustrated in Figure 1 of the accompanying drawings.

CTC manufacture involves a more severe maceration process than orthodox and results in a greater amount of cellular damage and a smaller particle size. Orthodox manufacture leads to a larger particle size and, as a consequence, less cellular disruption (See Figure 1). Orthodox teas therefore result in incomplete fermentation and are higher in catechins while CTC teas, which contain more theaflavins and thearubigins, give more highly coloured liquors. The differences in the composition, colour and taste/mouthfeel of orthodox and CTC teas are summarised in Figure 2.

It is an object of the invention to separate disruption from particle size reduction in order to generate at least substantially the same level of fermentation in a large leaf as would occur in CTC processed leaf particles. In response to that objective, the present inventors have developed a method for fermenting tea leaves, a method for manufacturing a leaf tea that resembles orthodox processed tea but infuses like CTC processed tea, and an apparatus for processing leaf tea in accordance with predetermined qualities of visual appearance, texture, infusion rate and, of course, taste. These all involve using heat rather than maceration to initiate fermentation in tea leaves.

It is known to heat leaves prior to a fermentation step, as opposed to initiate fermentation.

Japanese patent specification JP 62 115 236 (Terada Mfg) discloses a method for manufacturing tea that involves heating fresh tea leaves with IR radiation to promote withering and fermentation, fermenting the heated leaves in a fermenting unit, followed by parching, twisting and drying steps. The final product however is only semi-fermented.

Russian patent specification SU 1 034 685 A (Roinishvile) discloses a method for making black or green tea. The method involves subjecting tea leaves to an initial heat treatment at 90-150°C using steam or IR radiation prior to bulking, fermentation at 20-25° C for 60 to 140 minutes, multistage equilibration, bulking and drying. This prevents excessive fermentation.

United Kingdom patent specification GB 661 699 A (Bake) discloses a method and device for pre-heating tea leaves before fermentation in black tea manufacture. This preheating brings the leaves to an optimum temperature (50 to 122°C) at the very moment fermentation starts so as to make full use of the activity of the enzymes at the moment of rupture. The fermentation itself is initiated by maceration.

### Statement of the invention

As can be taken from claims 1-6, the present invention relates to a method for manufacturing black tea comprising subjecting tea leaves to a heat shock at a temperature and for a duration that is sufficient to initiate fermentation and allowing the tea to ferment for a time and at a temperature that is sufficient to yield black tea.

Preferably the tea is in the form of whole leaf black tea. The leaves may be withered, reduced in size or altered in shape at any stage between initiating the fermentation and arresting it.

The invention can also in broad terms be said to relate to a method for manufacturing a black leaf tea that resembles orthodox processed black tea but infuses like a CTC processed black tea.

A method for manufacturing a black leaf tea that resembles orthodox processed black tea but infuses like CTC processed black tea, the method comprising the steps of subjecting whole tea leaves to a heat shock at a temperature and for a duration that is sufficient to initiate fermentation, enabling the tea to ferment for a time and at a temperature that is sufficient to achieve desired liquor properties, and firing the leaves to arrest fermentation.

The invention can also be said to relate to an apparatus as claimed in claim 7 for manufacturing whole leaf black tea comprising withering means for withering whole tea leaves, a heat shock device for heating the leaves to a temperature and for a duration that is sufficient to initiate fermentation, and firing means for arresting the fermentation and drying the black tea leaves.

"Tea" for the purposes of the present invention means leaf material from *Camellia sinensis var. sinensis,* or *Camellia sinensis var. assamica*. It also includes *rooibos* tea obtained from *Aspalathus linearis* however that tends to be a poor source of endogenous fermenting enzymes. "Tea" is also intended to include the product of blending two or more of any of these teas.

"Black tea" for the purposes of this invention means tea that has been completely fermented or substantially fermented. It is distinguishable on that basis from green or oolong tea.

"Whole leaf tea" or "whole tea leaves" includes tea leaves that are substantially intact, that is leaves that have not been macerated whether that be comminuted by cutting etc, disrupted by rolling, or by some other means. It could conveniently include single leaves, a cluster of leaves or the traditional two leaves and a bud. Substantial leaf fragments that are otherwise unmacerated may well behave like intact leaves and thus for the purposes of this invention they should be considered as "whole leaf tea" too.

"Heat shock" for the purposes of this invention means a controlled sudden application of heat for a period of time that is sufficient to initiate the fermentation of whole leaf tea. That is, having the withered leaves to between 38°C C and 60° C and sustaining that temperature for 0,5 to 10 minutes, for example by applying steam. However one skilled in the art would appreciate that there are many other ways to apply heat to tea leaves.

### Detailed description of the invention

Tea manufacture, especially black tea manufacture, traditionally comprises four basic steps: withering, rolling, fermenting and firing.

Withering is a process whereby the plucked tea leaves are stored for periods of time (perhaps up to 24 hours), during which they undergo various biochemical and physical changes which often includes a loss of moisture.

Maceration follows the withering step, and traditionally the withered leaves are optionally rolled to bruise and crush the leaves i.e. break down the plant tissue structure. This will have the effect of liberating fermentable substrates and fermenting enzymes from within the plant cells and tissue. Modern tea manufacture usually includes this step however the plant cells and tissue is broken down by passing tea, which has usually been withered, through a cutting machine.

The next step is commonly called fermentation but that is a misnomer. "Fermentation" is commonly used in the context of brewing alcohol to describe the action of exogenous enzymes. However in the tea world it is used to refer to the oxidative process that tea undergoes when certain endogenous enzymes and substrates are brought together by mechanical disruption of the cells by tearing or cutting the leaves. Tea and other plant material can be oxidised by the action of exogenous enzymes such as oxidases, laccases and peroxidases so for present purposes the term "fermentation" will describe enzymic oxidation regardless of the source of the enzymes responsible.

The present invention relates to method for processing leaf tea, especially whole leaf tea. The leaves may be in the form of single leaves, a cluster of leaves or the traditional two leaves and a bud. The leaves can be withered in the normal way using art known techniques. Withering is not essential but it can be a useful means to enhance tea aroma.

However, in contrast to CTC black tea manufacture the leaves are not macerated by cutting, rolling or otherwise before fermentation has been initiated.

The conventional wisdom has been that whole leaf tea, withered or not, will not spontaneously ferment. It must be triggered. The present inventors have found that fermentation can be initiated by subjecting withered whole leaf tea to a heat shock.

Of course, one skilled in the art knows that if plucked leaves are exposed to high temperatures for several hours, for example when there are delays in transporting one tea from the field to the factory, uncontrolled fermentation can occur giving so called "red leaf". In an article by Okinda Owuor and Martin Obanda entitled "Effects of leaf handling on plain black tea quality from Tea, 18(1), 1997, pages 45-50 the quality of CTC processed red-leaf was assessed by the levels of theaflavins, thearubigins, brightness and total colour. The red leaf had been prepared by leaving plucked tea leaves in a polythene bag in the Kenyan sun for four hours. Owvor et al found there was a significant reduction in both the sensory evaluations and all the quality parameters monitored. In contrast to this, the present invention relates to a controlled heating step preferably including aeration to initiate fermentation and generate theaflavin levels similar to traditionally manufactured black tea.

In a previous paper by Messrs Owuor and Obanda "Impact of withering temperature on black tea quality" S. Sci. Food Agric., 70, pages 288-292 (1986), it was demonstrated that although leaf temperature may not develop to levels high enough to case "red" leaf formation before maceration, such high temperature development above ambient levels impairs the quality of resultant black teas. They conclude, it is therefore important that in the production of black tea, allowing leaf temperature to rise above ambient should be discouraged.

The conventional wisdom that suitably handled whole leaf tea will not ferment has been supportable in some minds by assuming that sufficient oxygen would not be available to the fermenting enzymes that are found in unmacerated leaves. However the present inventors recognised that leaves are respiratory organs and hence are designed to facilitate gaseous transfer. Indeed tea leaves are generally no more than nine cells thick.

A "heat shock" for the purposes of this invention means a controlled application of heat. This can be achieved in a number of ways. At the lab scale immersing withered whole leaf tea into water having a temperature above about 40° C was sufficient. A more practical method for factory scale operation would be to spray or otherwise apply hot air and/or steam to the leaves at a volume and rate that is sufficient to heat a known mass of the leaves to a predetermined temperature.

Much care must be taken in selecting a suitable heat shock temperature and duration. It seems from the experimental work that the critical temperature for initiating fermentation is 38 to 40°C. Fermentation is minimal at 35° C but certainly takes place at 40° C. At this temperature the effect is still reversible as if the temperature is lowered to 35° C fermentation practically stops. However, at about 55° C the effect appears to become irreversible since lowering the temperature to 35° C does not stop fermentation. At temperatures above 60° C the rate of fermentation begins to diminish. That is presumably because at such temperatures the oxidising enzymes begin to denature or otherwise deactivate. The responsiveness of this system to temperature was very surprising. It seemed as if the system had been provided with a "switch". With this knowledge the applicants became able not only to initiate the fermentation of whole leaf tea, but use temperature to control the rate and degree of fermentation.

Flavanols or more specifically flavan-3-ols tend to constitute up to 30% of the dry weight and are known as catechins. Amongst them, epigallocatechin-3-O-gallate (herein "EGCG") is predominant (10-15% of dry weight), and the other major components are epicatechin (1-3%), epigallocatechin (3-5%) and epicatechin-3-O-gallate (3-5%).

These are consumed by the chemical and enzymatic oxidations that take place during fermentation.

The catechins undergo oxidative bio-transformations, through their quinones, into dimeric compounds known as theaflavins (TFs) and higher molecular weight compounds known as thearubigins (TRs). TFs and TRs are responsible for the orange and brown colours of black tea infusions and products as well as making significant contributions to the astringency and body of the made tea. TRs are larger in size and darker in colour than TFs. The oxidative polymerisations are a combination of biochemical oxidations mediated by polyphenol oxidase and/or peroxidase enzymes present in the leaf and chemical reactions of reactive species. TFs include theaflavin (TF) itself and a range of related derivatives. TFs are known to have antioxidant properties and are therefore of interest to food and health industries.

One can measure the rate and extent of fermentation by monitoring the consumption of catechins (either as a family of compounds or a selection of the prevalent ones) and the production of theaflavins (again, either as a family or a selection of individual theaflavins).

By testing various systems the inventors have found that fermentation can be initiated by subjecting tea leaves to a heat shock temperature of between 38° C and 60°C. The heat shock should suitably last 0.5 to 10 minutes, but preferably 1 to 3 minutes. The leaves should be allowed to ferment for 1 to 24 hours, but preferably 2 to 7 hours.

The fermented whole leaves are fired in the normal way using art known techniques to produce a black leaf tea product. Firing involves heating and drying the tea to destroy the fermenting enzymes and thereby arrest fermentation. It results in a reduction of moisture content to below 5%, and also leads to further chemical oxidation and changes in tea aroma. This generally involves exposing the tea to a blast of hot, dry air in a dryer.

Aroma is influenced by genetic, cultural, and manufacturing variables. It can have a profound influence on a consumer's perception of quality and even taste. It is known that withering can be used to enhance the aroma of tea. This is discussed in the aforementioned "Tea: cultivation to consumption" by K. C. Willson and M. N. Clifford.

The present invention also relates to an apparatus for processing whole leaf tea. The apparatus comprises withering means for withering whole tea leaves, a heat shock device for heating the leaves to a temperature and for a duration that is sufficient to initiate fermentation, and firing means for arresting the fermentation and drying the leaves.

The apparatus preferably includes means for altering the size or the shape of the leaves. That might take the form of cutters and/or rollers. These could be adapted to give the tea the appearance of orthodox processed tea or indeed any desired leaf fragment size or shape. This size reduction or shape alteration could be carried out at any stage between initiating fermentation and arresting it.

In one embodiment of the invention the product of invention resembles orthodox processed tea but infuses like CTC processed tea. However that need not be the only desired outcome. One skilled in the art will appreciate that provided with the ability to control the fermentation of whole leaf tea and the size and shape of the fired product one can tailor a whole leaf tea to a desired appearance and infusion performance.

In some cases it may be necessary or simply convenient to blend the fermented or fired tea with a CTC processed tea or tea granules in order to meet desired liquor characteristics.

The product of the invention is a leaf tea which one skilled in the art would also appreciate can, if desired, be used to make a variety of tea based products including tea bags, tea powders, tea concentrates and ready to drink teas.

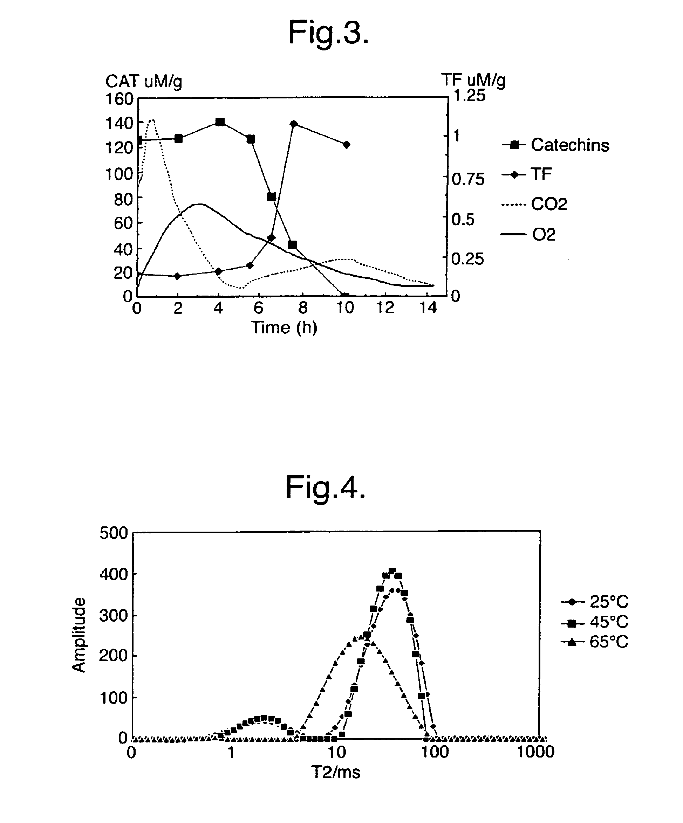

The method of the invention will now be described with reference to the following examples and the accompanying drawings (Figures 3 to 17).

### Example 1

Whole Kenyan tea leaves were fermented at 40° C and the concentration of catechins and theaflavins were determined using HPLC-based methods. The results are shown in Fig. 3.

The activity of the oxidative enzymes found in the tea was evident by a rapid burst of oxygen consumption followed by a more gradual fall. Carbon dioxide is a product of these reactions and its production was seen to rise steadily, peak after 3 hours and then gradually tail off.

During the fermentation stage of black tea manufacture a third perhaps to a half of the catechins found in tea oxidises to yield theaflavins. Figure 3 shows that the catechin content of whole leaf tea steadily decreased after being held to 40° C for four hours while the concentration of theaflavin increased to about 1.1 µM/g (wet weight) before gradually dropping, presumably as theaflavin is further metabolised. This disproved the conventional wisdom that tea must be macerated in order to ferment, forming significant levels of theaflavin.

Drying the fermented tea that was produced from this experiment gave a black tea that with a favourable "tea-like" colour but it was rather dull and lacking in aroma. Theaflavin content was about one third of that of a similar CTC processed black tea. Nevertheless this experiment clearly demonstrated that whole leaf fermentation can be used to prepare a black leaf tea.

### Example 2

Proton NMR spin-spin relaxation time (T2) measurements are sensitive probes of molecular motion. In the case of a whole tea leaf the proton signal is dominated by water and the mobility of the water will depend on the cell structure within the leaf. As a result of the distribution of water environments within the leaf there will be a distribution in the observed relaxation times, and any damage to the cell structure induced by heating should result in changes to the water mobility which will be reflected by a change in the observed relaxation time distribution.

Proton relaxation times were recorded on a Resonance Instruments MARAN (TM) spectrometer, operating at 20 MHz. The relaxation times were recorded using the Carr-Purcell-Meiboom-Gill (CPMG) pulse sequence with an interpulse spacing of 200 ms and a recycle delay of 1 s. The CPMG decay envelopes were fitted to a distribution function using the R.I. program DXP. In all the experiments fresh intact leaves were used and four experiments were undertaken. The effects of heating a leaf to 42° C, heating a leaf to 60° C, and continued heating at high temperature were investigated.

The relaxation time of a fresh tea leaf was recorded as a function of temperature between 25° C and 42° C. The leaf was then held at 42° C for 30 minutes, before being cooled to 25° C and the relaxation times again recorded as the leaf was reheated to 60° C. The relaxation time of a second tea leaf was recorded as a function of temperature between 25°C and 60°C. The leaf was then held at 60° C for 30 minutes before being cooled to 25° C and the relaxation times again recorded as the leaf was reheated to 60°C. A summary of the results is shown in Figure 4.

In both cases, no significant changes were observed to the relaxation time distributions below 45° C. Two peaks were observed in the relaxation time distribution, the main peak centred around 50 ms is due to the water within the leaf, while the origin of the minor peak around 2 ms is unclear, but is possibly due to some mobile low molecular weight material. Above 45° C a significant shift in the relaxation time distribution was observed, which was found to be irreversible on cooling. The position of the main water peak was shifted to a shorter relaxation time distribution centred around 10 ms. This decrease in relaxation time is consistent with the formation of a more concentrated solution, which could be caused by (1) dehydration of the leaf, (2) damage to the cell structure allowing a greater interaction of the cellular water with the cell wall material, or (3) Damage to the cell structure allowing additional solutes to be dissolved in the water.

If the observed shift in the relaxation behaviour were due solely to dehydration, then it would be expected that continued heating at elevated temperature would result in further water loss, and a further change in the relaxation time behaviour. To investigate the effects of continued heating; a fresh leaf was heated from 25° C to 75° C and held at 75° C for 30 minutes while the relaxation times were recorded. A change in the relaxation time distribution was again observed around 45°C, but no further significant changes were observed with continued heated. It can therefore be concluded that the observed change in the relaxation behaviour of the water is due to a structural change in the leaf.

The results show that NMR relaxation time measurement can be a sensitive probe of damage to the cell structure of a fresh tea leaf. More specifically it was found that heating a tea leaf to 42° C does not result in significant damage to the cell structure of the leaf and heating a tea leaf above 50°C results in irreversible damage.

### Example 3

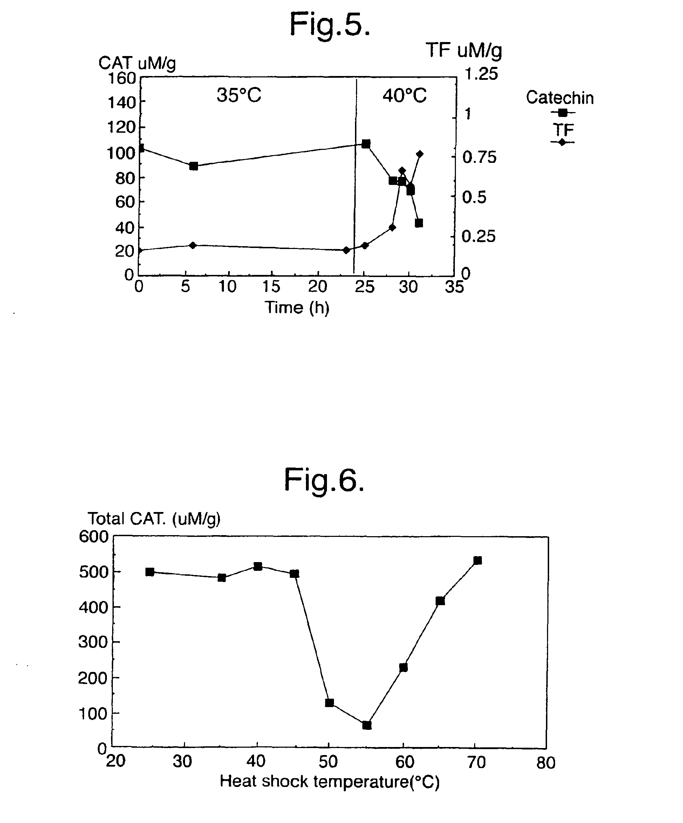

Withered whole leaf tea leaves were kept at 35° C for 24 hours and then brought to 40°C for a further 7 hours. The relative concentration of catechins and theaflavins were determined as before. The results are given in Figure 5.

When held at 35° C the concentration of catechins and theaflavins remained fairly stable. These conditions would be typical of the withering stage of black tea manufacture during which various biochemical and physical changes are believed to occur including moisture loss. Surprisingly, raising the temperature by just 5° C triggered a significant fall in the concentration of catechins and a significant increase in the concentration of theaflavins. That would suggest that the tea suddenly began to ferment. These results led the present inventors to investigate the responsiveness of small temperature changes.

### Example 4

Whole tea leaves were subjected to a 5 minute heat shock and left for 18 hours. The total catechin content was determined and these results are given in Figure 6.

The term "heat shock" is intended to describe a sustained application of heat that is sufficient to raise a given quantity of tea leaves to a predetermined temperature.

Tea leaves were subjected to heat shock temperatures ranging from 25° C to 70° C for a period of 5 minutes by dipping them into appropriately heated water. In each case the leaves were left over night at 20° C in a polythene bag to allow fermentation to occur. The concentration of total catechins was measured 18 hours after applying the heat shock. The inventors found that the total catechin concentration of tea leaves that had been subjected to heat shock temperatures between 25° C and 45° C were all about 500 µM/g (on a dry weight basis) after 18 hours, however the concentration dropped to about 125 µM/g (dry weight) with a 50° C heat shock, and about 60 µM/g (dry weight) with a 55° C heat shock. These dramatic decreases indicated that fermentation had occurred. Applying a higher temperature heat shock was found to yield an increasingly less profound effect on catechin concentration. This was presumably because while fermentation was triggered at these temperatures some of the oxidising enzymes were denatured or otherwise inactivated.

This supports the aforementioned interpretation of the NMR work represented in Figure 4, that is that a sudden change occurs when whole leaves are subjected to a heat shock between about 45° C and 55° C.

### Example 5

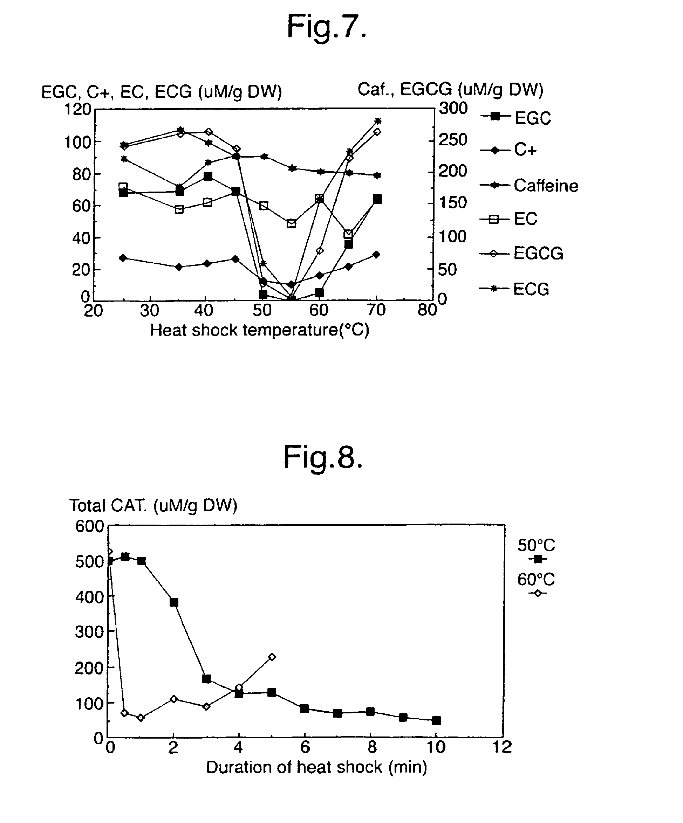

Whole tea leaves were subjected to heat shocks of varying temperatures for 5 minutes and left for 18 hours. The concentration of certain catechins was determined and these results are given in Figure 7.

The content of epigallocatechin (EGC), catechin (C+), epicatechin (EC), epicatechin gallate (ECG) and epigallocatechin gallate (EGCG) were measured after the 18 hours. Although not a catechin, the concentration of caffeine was also measured as an indication as to whether any leaching had occurred. It can be seen from Figure 4 that when the heat shock temperature is more than 45° C there is a significant decrease in the concentration of all of the catechins measured, but especially the gallated catechins, EGCG and ECG. The concentration of caffeine varied little with heat shock temperature that indicates that any leaching effect was minimal. At heat shock temperatures above 50° C, especially above and 60° C, fermentation occurred but enzyme damage increasingly diminished catechin consumption. The sequential oxidation of catechins was similar to that seen when fermenting CTC processed black tea hence a whole leaf tea can, under appropriate conditions, behave as a CTC tea.

### Example 6

Figure 8 represents the total catechin content of whole leaf black tea samples that were subjected to heat shocks of varying duration at 50° C and 60° C and allowed to ferment for 18 hours.

A 50° C heat shock lasting between 1 and 3 minutes was sufficient to create a marked decrease in catechin concentration. Surprisingly, a heat shock of only 30 seconds at 60° C was sufficient to allow almost complete fermentation to occur. The responsiveness and the non-reversible nature of the heat shock effect suggested a form of "switch" was in operation.

### Example 7

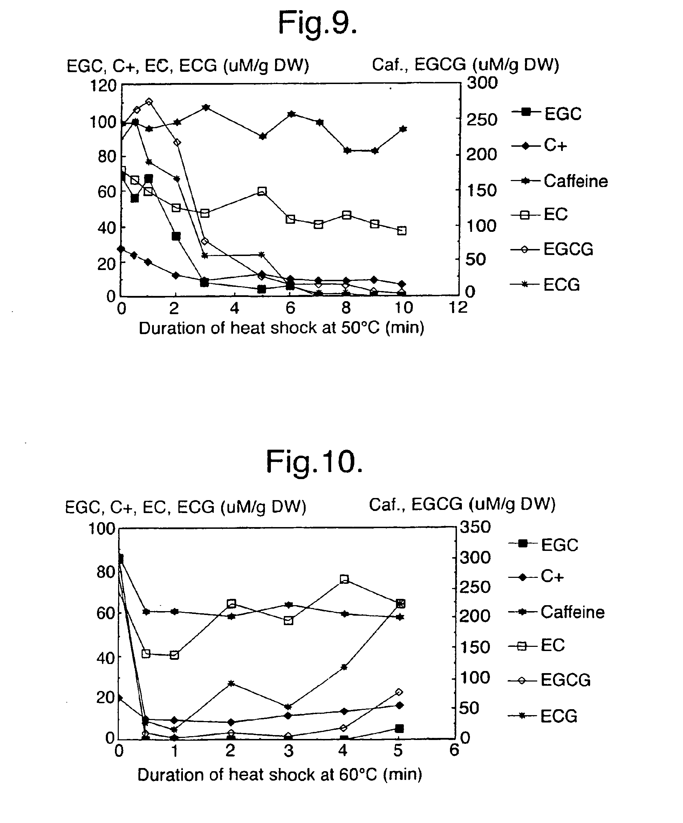

Figure 9 shows the concentration of certain catechins in whole tea leaves 18 hours after having been subjected to 50° C heat shocks of varying duration. The results showed a consequential decrease in concentration of the various catechins occurred when subjected to the heat shock for 1 to 3 minutes. Once again the concentration of caffeine did not vary significantly thus suggesting there was no significant leaching taking place.

### Example 8

Figure 10 represents the concentration of certain catechins in whole tea leaves 18 hours after having been subjected to 60° C heat shocks of varying duration. Less than a minute was required to result in almost complete oxidative fermentation of each of the catechins.

### Example 9

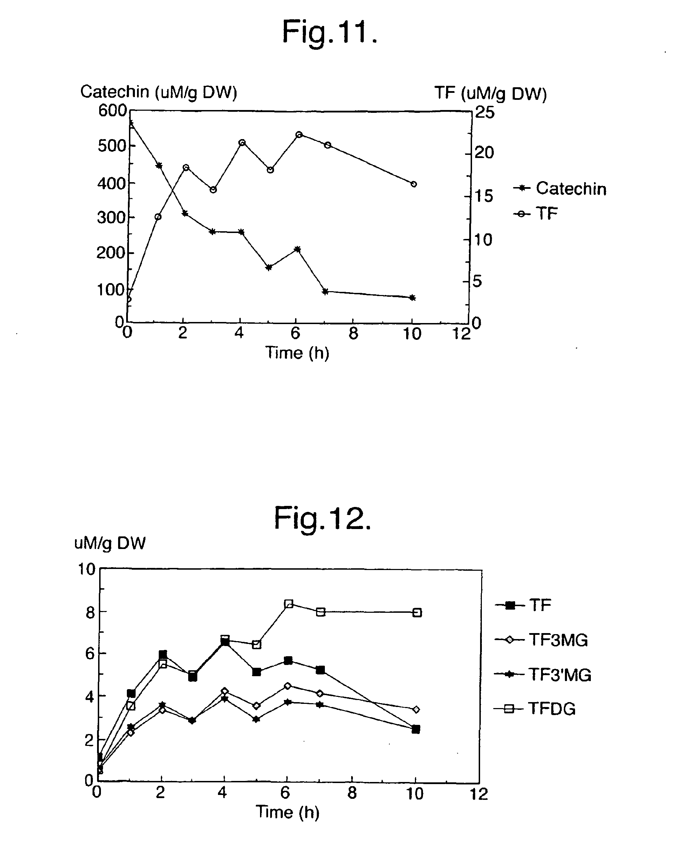

Figure 11 shows how the concentration of catechins and theaflavins in whole black Kenyan tea leaves changed when subjected to a 5 minute heat shock at 55° C and left for varying times. Catechin concentration decreased with time but only a few hours were required to give significant yields. The decrease in the concentration of theaflavins was probably due to their being gradually further oxidised to form thearubigins and/or bound to other leaf components or substances.

### Example 10

Figure 12 shows the increase in theaflavin concentration when subjected to a 5 minute heat shock at 55° C and then left to ferment for certain periods of time. Significant increases in all theaflavins were noted. This was similar to that seen when fermenting CTC processed black tea.

### Example 11

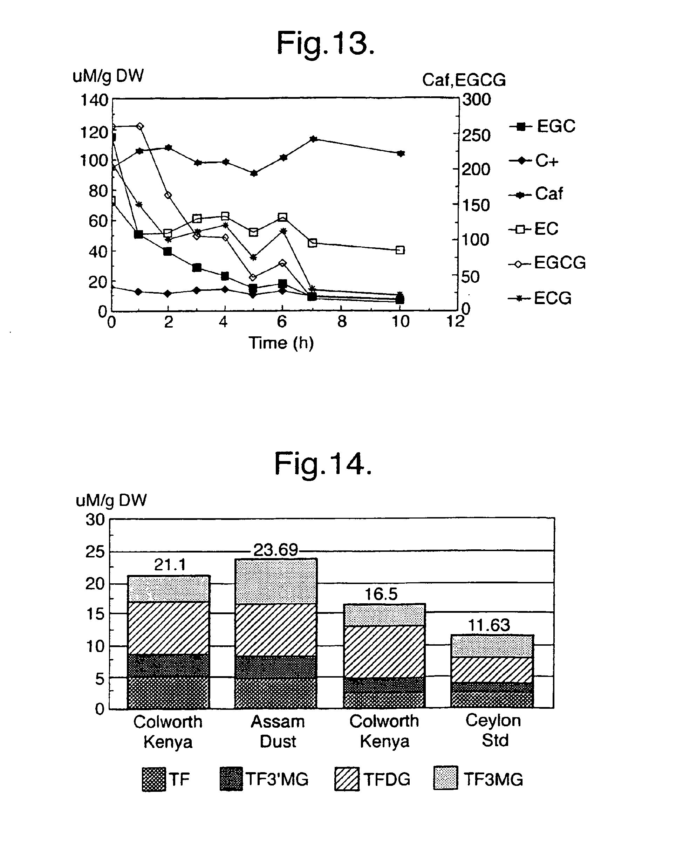

Figure 13 shows the consumption of total catechins when subjected to a 5 minute heat shock at 55° C and then left to ferment for certain periods of time. The concentration of all catechins decreased within the first 2 hours, some sooner. Once again the pattern was similar to that observed when fermenting CTC processed black tea. As in the other experiments, the concentration of caffeine did not alter significantly thus indicating there was no leaching.

### Example 12

Figure 14 shows a comparison of theaflavin concentrations of various fermented teas: a Kenyan tea grown in controlled conditions near Bedford, United Kingdom, Assam dust and a standard Ceylon tea. A first sample of the Kenyan tea was subjected, as whole leaves, to a 5 minute heat shock at 55° C and left to ferment for 7 hours. The Assam dust was CTC processed tea. It was chosen as representing desirable qualities of taste, aroma and colour. A second sample of the Kenyan tea was subjected, as whole leaves, to a 5 minute heat shock at 55° C and left to ferment for 26 hours. The Ceylon standard tea was an orthodox processed tea. The concentration of theaflavin (TF), theaflavin-3'mono-gallate (TF3'MG), theaflavin di-gallate (TFDG) and theaflavin-3 mono-gallate (TF3MG) were measured for each. As one can see from Figure 14 the relative concentrations of the various theaflavins were similar, the differences at least in part would be attributable to inherent variations between varieties of tea. The actual theaflavin concentrations of the first sample of the whole leaf Kenyan tea were much closer to those of the CTC processed Assam dust rather than the orthodox standard Ceylon tea. This proves that one can make a fermented whole leaf tea that behaves more like a CTC processed tea than an orthodox tea. Comparing the results from the first and second samples of the Kenyan tea it would appear that using longer fermentation times should be avoided. This may well be a matter of theaflavins being lost by further oxidising reactions or becoming bound to other molecules.

### Example 13

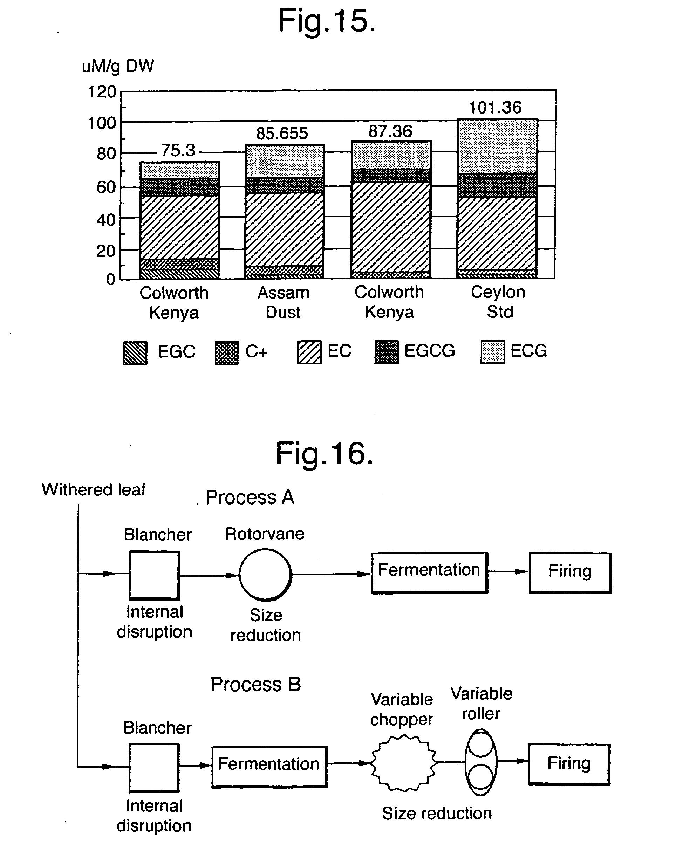

Figure 15 shows a comparison of the concentrations of residual catechins that were measured in the same samples that generated the data illustrated in Figure 14. Residual catechins are those that were not oxidised to form theaflavins or other compounds. Both samples of whole leaf Kenyan teas contained fewer residual catechins than the standard orthodox Ceylon tea. This correlates with the higher theaflavin production shown in Figure 14.

### Example 14

Figure 16 depicts two process schematics, one for Process A, and one for Process B.

In Process A withered tea leaves, preferably whole tea leaves, are fed into a blancher to cause internal disruption and initiate fermentation (a blancher in this context being any piece of equipment capable of performing the desired heat treatment). The fermenting tea is passed through a Rotorvane machine or the like to reduce the size of the tea leaves before entering a conventional fermenter. The leaves are fired to arrest fermentation and are then ready for storing, packaging or further processing.

In Process B withered tea leaves, preferably whole tea leaves, are fed into a blancher to cause internal disruption and initiate fermentation. The tea is fermented in conventional fermenting equipment then passed through a variable chopper to reduce the size of the tea followed by a variable roller to alter the shape of the tea. The leaves are fired to arrest fermentation and are then ready for storing, packaging or further processing.
Using withered tea leaves is preferable to maximise aroma. However one could use non-withered tea leaves. Processes A and B are merely preferred embodiments of the invention.
One skilled in the art would appreciate that the appropriate choice of blanching, cutting, rolling, fermenting and firing equipment, and the order in which they are used, can vary and will depend the desired properties of the final product.

### Example 15

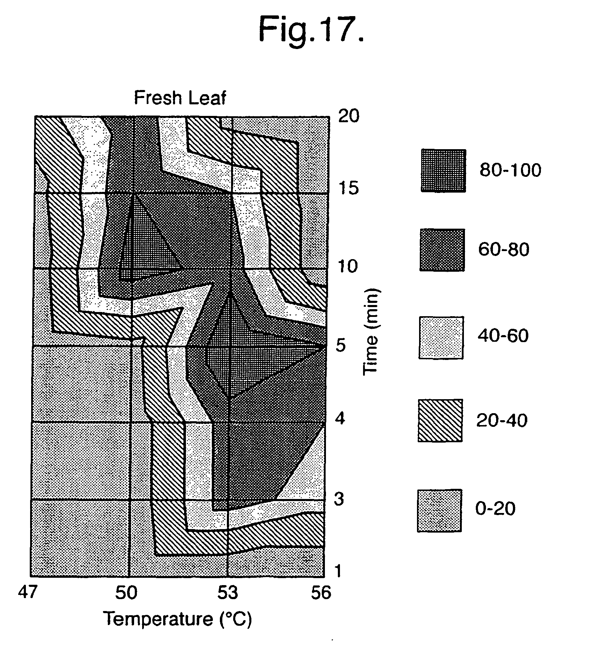

Fresh tea leaves were subjected to heat shocks of varying temperature and duration. The extent of fermentation was measured in each case and those results were used to generate the heat shock efficiency profile shown in Figure 17. Such a profile can be used to tailor the method conditions to the desired black tea properties.

It should be appreciated that the heat shock efficiency profile may well depend on the origin of tea, the extent of withering and other factors.

## Claims

1. A method for manufacturing black tea comprising fermenting unmacerated tea leaves, firing the leaves to arrest fermentation, and drying the leaves to yield black leaf tea, the method being **characterised in that** the fermentation is initiated by heating the unmacerated tea leaves to a temperature between 38° C and 60° C for 0.5 to 10 minutes.

2. A method according to claim 1 wherein the leaves are heated to a temperature of between 50° C and 60°C to initiate the fermentation.

3. A method according to claim 2 wherein the leaves are heated at said temperature for 1 to 3 minutes.

4. A method according to any preceding claim wherein at some stage between initiating and arresting the fermentation, the tea leaves are withered.

5. A method according to any preceding claim wherein at some stage between initiating and arresting the fermentation, the size or shape of the leaves is physically altered.

6. A method according to any preceding claim wherein the fermented leaf tea is blended with CTC processed tea or tea granules in order to meet predetermined liquor characteristics.

7. An apparatus for manufacturing whole leaf black tea comprising withering means for withering fresh whole tea leaves, means for heating the withered unmacerated tea leaves to a temperature between 38° C and 60° C for 0.5 to 10 minutes to initiate fermentation, and firing means for arresting the fermentation and drying the black tea leaves.

## Patentansprüche

1. Verfahren zur Herstellung von Schwarztee, umfassend das Fermentieren von nicht mazerierten Teeblättern, das Rösten der Blätter zum Stoppen der Fermentation und das Trocknen der Blätter zur Lieferung von schwarzem Blatttee, **dadurch gekennzeichnet, dass** die Fermentation durch Erwärmen der nicht mazerierten Tee-blätter auf eine Temperatur zwischen 38°C und 60°C über 0,5 bis 10 Minuten eingeleitet wird.

2. Verfahren nach Anspruch 1, worin die Blätter zur Einleitung der Fermentation auf eine Temperatur zwischen 50°C und 60°C erwärmt werden.

3. Verfahren nach Anspruch 2, worin die Blätter 1 bis 3 Minuten auf diese Temperatur erwärmt werden.

4. Verfahren nach einem der vorhergehenden Ansprüche, worin die Teeblätter in einem Stadium zwischen der Einleitung und dem Stoppen der Fermentation angewelkt werden.

5. Verfahren nach einem der vorhergehenden Ansprüche, worin die Größe oder Form der Blätter in einem Stadium zwischen der Einleitung und dem Stoppen der Fermentation physikalisch verändert wird.

6. Verfahren nach einem der vorhergehenden Ansprüche, worin der fermentierte Blatttee mit CTC-verarbeitetem Tee oder Teekörnchen vermischt wird, um vorherbestimmten Flüssigkeitsmerkmalen zu entsprechen.

7. Vorrichtung zur Herstellung von Vollblatt-Schwarztee, umfassend Welkmittel zum Anwelken von frischen ganzen Teeblättern, eine Einrichtung zum Erwärmen der angewelkten, nicht mazerierten Teeblätter auf eine Temperatur zwischen 38°C und 60°C über 0,5 bis 10 Minuten zur Einleitung der Fermentation und Röstmittel zum Stoppen der Fermentation und Trocknen der Schwarzteeblätter.

## Revendications

1. Procédé de production de thé noir comprenant la fermentation de feuilles de thé non macérées, la dessiccation des feuilles pour arrêter la fermentation et le séchage des feuilles pour produire du thé noir en feuilles, le procédé étant **caractérisé en ce que** la fermentation est enclenchée par le chauffage des feuilles de thé non macérées à une température comprise entre 38 °C et 60 °C pendant 0,5 à 10 minutes.

2. Procédé selon la revendication 1, dans lequel les feuilles sont chauffées à une température comprise entre 50 °C et 60 °C pour enclencher la fermentation.

3. Procédé selon la revendication 2, dans lequel les feuilles sont chauffées à ladite température pendant 1 à 3 minutes.

4. Procédé selon l'une quelconque des revendications précédentes, dans lequel à un certain stade entre l'enclenchement et l'arrêt de la fermentation, les feuilles de thé sont flétries.

5. Procédé selon l'une quelconque des revendications précédentes, dans lequel à un certain stade entre l'enclenchement et l'arrêt de la fermentation, la taille ou la forme des feuilles est physiquement modifiée.

6. Procédé selon l'une quelconque des revendications précédentes, dans lequel le thé fermenté en feuilles est mélangé à du thé traité par CTC ou à des granules de thé afin d'obtenir des caractéristiques de liqueur prédéterminées.

7. Appareil de production de thé noir en feuilles entières comprenant un moyen de flétrissage pour flétrir les feuilles de thé fraîches et entières, un moyen de chauffage des feuilles de thé flétries non macérées à une température comprise entre 38 °C et 60 °C pendant 0,5 à 10 minutes pour enclencher la fermentation et un moyen de dessiccation pour arrêter la fermentation et sécher les feuilles de thé noir.
